# FASCICULE DE BREVET EUROPEEN

(11) **EP 0 331 575 B1**
(45) Date de publication et mention de la délivrance du brevet: **21.07.1993**
(21) Numéro de dépôt: 89400551.1
(22) Date de dépôt: 28.02.1989
(51) Int. Cl.: G02B 27/10, B01D 59/34

(54) **Dispositif de répartition des faisceaux lasers utilisés dans un procédé de séparation isotopique par lasers**
Vorrichtung zur Auftrennung von Laserstrahlen zur Verwendung bei der Isotopentrennung mittels eines Lasers
Device for dividing laser beams used in a process for separating isotopes by means of lasers

(30) Priorité: 02.03.1988 FR 8802634
(43) Date de publication de la demande: 06.09.1989
(73) Titulaire: COMMISSARIAT A L'ENERGIE ATOMIQUE, 75015 Paris Cédex 15 (FR)
(72) Inventeur: Michon, Maurice, F-91210 Draveil (FR)
(74) Mandataire: Signore, Robert

(56) Documents cités:
- FR-A- 2 341 873
- FR-A- 2 591 510
- FR-A- 2 603 427

## Description

La présente invention a pour objet un dispositif de répartition des faisceaux lasers utilisés dans un procédé de séparation isotopique par lasers. Elle s'applique notamment aux réactions sélectives, telle la séparation isotopique de vapeur d'uranium par lasers.

Dans un dispositif de séparation isotopique, on excite sélectivement une espèce isotopique contenue dans un écoulement de vapeur, puis on isole cette espèce excitée, par photo-ionisation, par exemple.

Dans les montages connus de répartition des faisceaux lasers utilisés dans les réactions de séparation isotopique, tels que ceux décrits dans la demande de brevet français n° 8 504 827 du 29 Mars 1985, les faisceaux d'excitation sélective et de photo-ionisation ont nécessairement des polarisations différentes dans la zone d'irradiation ; ces polarisations sont perpendiculaires si elles sont rectilignes, ou droite et gauche si elles sont circulaires.

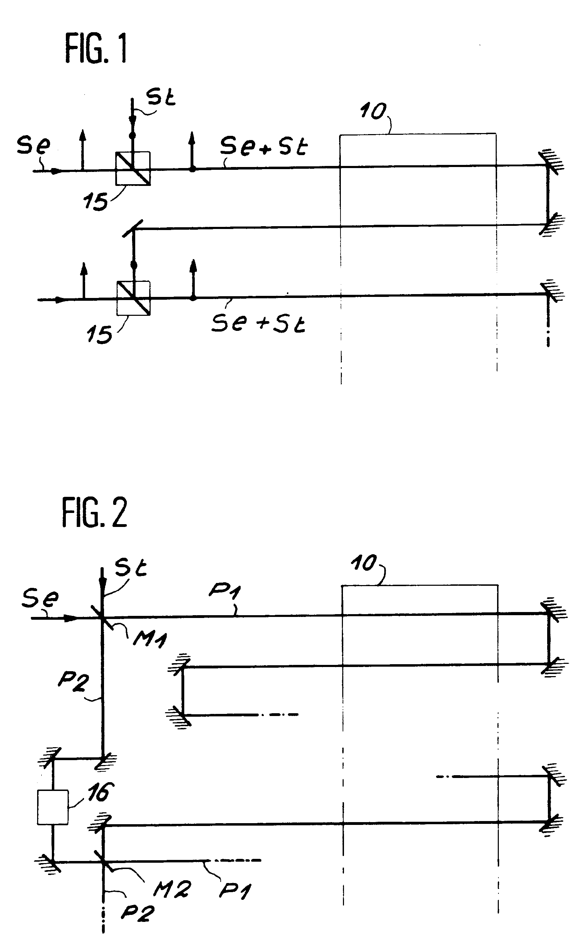

On voit sur la figure 1 un dispositif selon l'art antérieur. Des faisceaux Se et St, respectivement d'excitation et de photo-ionisation, de polarisations perpendiculaires, sont superposés et dirigés vers une enceinte 10 de réaction par l'intermédiaire d'un premier prisme de Glan 15. Le faisceau Se peut contenir plusieurs faisceaux à plusieurs longueurs d'ondes différentes. Les sections efficaces d'absorption pour le faisceau Se et pour le faisceau St sont différentes : le faisceau Se est plus absorbé que le faisceau St. Après de multiples passages dans l'enceinte, le faisceau Se est fortement atténué, le processus de réaction sélective n'est plus efficace. Le faisceau St résiduel est envoyé vers un second prisme de Glan 15 et superposé à nouveau à un faisceau Se provenant d'une source laser non représentée. Après traversée du second prisme de Glan 15, les faisceaux superposés Se+St sont envoyés dans l'enceinte et ainsi de suite jusqu'à absorption totale du faisceau St. Selon les transitions atomiques choisies, le fait que les polarisations des faisceaux soient fixées par le montage est défavorable.

D'autres dispositifs répartissant les faisceaux au moyen de miroirs partiellement réfléchissants appropriés ont été étudiés pour pallier cet inconvénient : le choix des polarisations est libre.

On a représenté figure 2 un tel arrangement de dispositif utilisant des miroirs partiellement réfléchissants. Le faisceau d'excitation sélective Se, pouvant contenir plusieurs faisceaux à des longueurs d'ondes différentes, est superposé à un faisceau St de photo-ionisation. Les faisceaux superposés sont divisés en deux parties P1 et P2 par un premier miroir partiellement réfléchissant M1. La partie P1 est dirigée vers l'enceinte 10 de réaction. La partie P2 est dirigée vers un second miroir partiellement réfléchissant par l'intermédiaire de moyens 16 de synchronisation. La partie P1 est envoyée à l'intérieur de l'enceinte 10 pour de multiples passages. Lorsque la fluence du faisceau St est égale à la fluence à saturation pour la longueur d'onde de ce faisceau, c'est-à-dire lorsque le nombre de photons par impulsion par unité de surface à la longueur d'onde de photo-ionisation est égale à l'inverse de la section efficace d'absorption pour cette longueur d'onde, la partie résiduelle de P1 est superposée à la partie P2 provenant du miroir partiellement réfléchissant M1. Les impulsions de P1 et de P2 sont synchronisées par des moyens 16 de synchronisation.

Un second miroir partiellement réfléchissant M2 divise en deux parties les faisceaux P1 et P2 provenant du miroir partiellement réfléchissant M1.

Le choix des coefficients de réflexion des miroirs partiellement réfléchissants, de la longueur du trajet dans l'enceinte entre deux miroirs et du nombre de ces miroirs permet d'utiliser au mieux l'énergie des différents faisceaux lasers.

Dans ce type de dispositif, l'efficacité est limitée par la formation d'interférences entre la partie résiduelle de P1 et la partie P2 des faisceaux lors de leur superposition. Ces interférences détruisent l'homogénéité spatiale des faisceaux, nécessaire au bon déroulement du processus d'extraction.

La présente invention tout en laissant libre le choix des polarisations des différents faisceaux, permet d'éliminer toute interférence entre les faisceaux.

La présente invention permet aussi d'adapter les valeurs des intensités des faisceaux aux différentes valeurs des sections efficaces d'absorption aux différentes longueurs d'ondes mises en jeu.

On connaît, par FR-A-2 341 873, un dispositif de combinaison de faisceaux lasers de différentes fréquences pour une application à la séparation isotopique.

La présente invention a pour objet un dispositif de répartition des faisceaux lasers utilisés dans un procédé de séparation isotopique par lasers, conformément à la revendication unique.

Les miroirs dichroïques se comportent comme des filtres. Une première partie des faisceaux superposés utilisés dans le processus d'extraction est dirigée vers l'enceinte de réaction pour un trajet comprenant plusieurs passages à travers l'enceinte.

Selon un mode préféré de réalisation de ce dispositif, lorsque la fluence d'un des faisceaux est égale à la fluence à saturation, on superpose une nouvelle partir de ce faisceau aux faisceaux qui ont déjà traversé l'enceinte. Cette superposition est effectuée grâce à un miroir dichroïque approprié qui permet de réfléchir les faisceaux ayant traversé l'enceinte et dont la fluence est supérieure à la fluence à saturation. Selon l'invention, le miroir dichroïque est choisi tel qu'il transmette le faisceau dont la fluence est égale à la fluence à saturation et permette la superposition d'une nouvelle partie de ce faisceau aux autres faisceaux dont la fluence est supérieure à la fluence à saturation. L'intensité de la nouvelle partie du faisceau est telle que la fluence de cette nouvelle partir du faisceau superposé soit supérieure à la fluence à saturation.

Ce moyen de superposition des faisceaux permet donc bien d'éviter la création d'interférences entre-le résidu du faisceau dont la fluence est égale à la fluence à saturation et la nouvelle partie de ce faisceau.

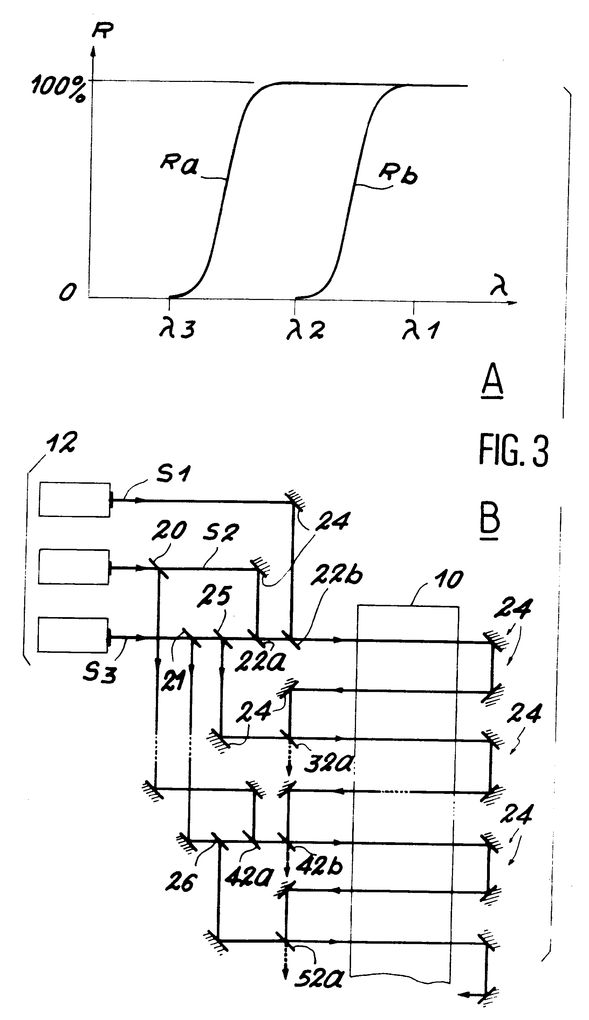

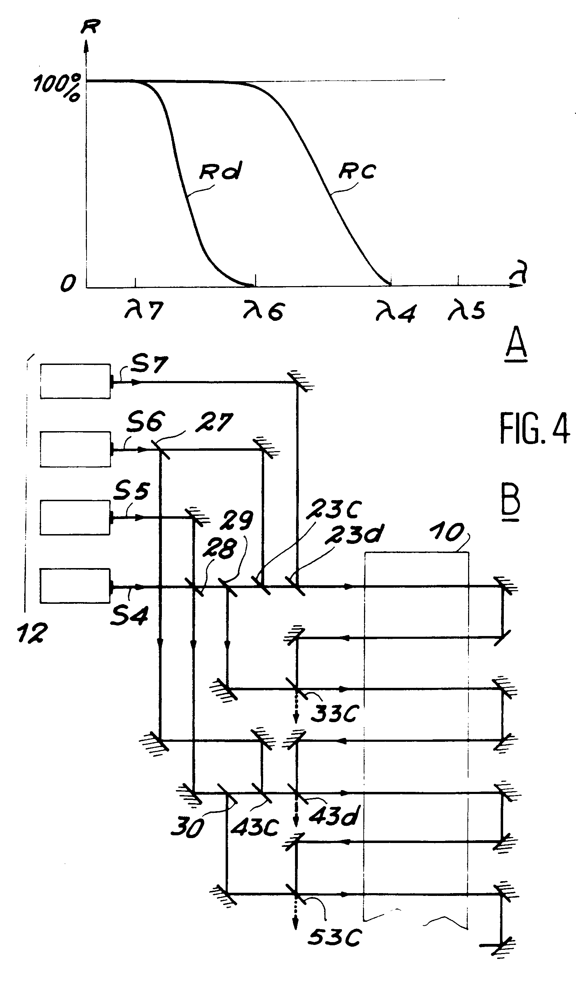

D'autres caractéristiques et avantages de l'invention ressortiront mieux de la description qui va suivre, donnée à titre purement illustratif et non limitatif, en référence aux figures 3 et 4, annexées dans lesquelles :
- la figure 3A représente les courbes de réflectivité de deux miroirs dichroïques en fonction de la longueur d'onde ;
- la figure 3B représente un dispositif conforme à l'invention répartissant trois faisceaux lasers ;
- la figure 4A représente des courbes de réflectivité de deux miroirs dichroïques en fonction de la longueur d'onde ;
- la figure 4B représente un dispositif conforme à l'invention répartissant quatre faisceaux lasers.

La figure 3A représente les courbes de réflectivité de deux miroirs dichroïques en fonction de la longueur d'onde.

Les deux courbes Ra et Rb présentent un flanc très marqué et passent donc très franchement, quand la longueur d'onde augmente, d'un état où la réflectivité est nulle à un état où la réflectivité est totale (100%). Les deux miroirs dichroïques correspondant à ces courbes sont utilisés pour superposer des faisceaux S1, S2 et S3 dont les longueurs d'ondes respectives sont λ1, λ2 et λ3. La longueur d'onde λ3 n'est réfléchie par aucun des deux miroirs. La longueur d'onde λ2 est réfléchie par le miroir correspondant à la courbe Ra et transmise par le miroir correspondant à la courbe Rb. La longueur d'onde λ1 est réfléchie par les deux miroirs.

La figure 3B représente un dispositif conforme à l'invention répartissant trois faisceaux S1, S2, S3 de longueurs d'ondes λ1, λ2, λ3 et utilisant des miroirs dichroïques tels que décrits figure 3A.

Des sources lasers 12 délivrent des faisceaux S1, S2, S3 de longueurs d'ondes λ1, λ2 et λ3. On suppose dans cet exemple que l'intensité de chacun des faisceaux S1, S2, S3 est la même. Les sections efficaces d'absorption correspondant aux longueurs d'ondes λ1, λ2, λ3 sont différentes : la section efficace d'absorption à λ3 est supérieure à la section efficace d'absorption à λ2, qui est supérieure à la section efficace d'absorption à λ1, par exemple.

La section efficace à λ3 est égale à deux fois la section efficace à λ2, elle-même égale à deux fois la section efficace à λ1 par exemple. Le coefficient de réflexion et le coefficient de transmission des miroirs partiellement réfléchissants utilisés dans cet exemple sont alors de 0,5.

On voit sur la figure 3B que le faisceau S1 est renvoyé par un moyen de renvoi 24, un miroir par exemple, vers un premier miroir dichroïque 22b, caractérisé par la courbe de réflectivité Rb. Le faisceau S2 est divisé en deux parties par un miroir partiellement réfléchissant 20. Une première partie du faisceau S2 est dirigé par un miroir, par exemple, vers un second miroir dichroïque 22a, caractérisé par la courbe de réflectivité Ra. Le faisceau S2 est réfléchi par le second miroir dichroïque 22a, il est transmis et superposé au faisceau S1 par le premier miroir dichroïque 22b.

Le faisceau S3 est divisé une première fois par un miroir partiellement réfléchissant 21 puis une seconde fois par un autre miroir partiellement réfléchissant 25. Le faisceau S3 est ensuite superposé aux faisceaux S1 et S2 après traversée des miroirs dichroïques 22a, 22b.

Les faisceaux S1, S2, S3 superposés traversent, en de multiples passages, l'enceinte 10. Pour ce faire, les faisceaux S1, S2, S3 sont renvoyés par des moyens de renvoi 24, des miroirs, par exemple. Lorsque la fluence d'un des faisceaux, S3 par exemple, est égale à la fluence à saturation, par exemple, on superpose la partie de S3 issue de sa deuxième division aux faisceaux S1 et S2. Le faisceau résiduel de S3 (en pointillé sur la figure 3B) est séparé des autres faisceaux ayant traversé l'enceinte par passage à travers un miroir dichroïque 32a du même type que le miroir dichroïque 22a. On évite ainsi toute formation d'interférences entre le faisceau résiduel S3 et la partie de S3 issue de la deuxième division.

Après un nouveau trajet constitué de plusieurs passages dans l'enceinte 10, les faisceaux S2 et S3 ont leur fluence égale à la fluence à saturation pour les longueurs d'ondes λ2 et λ3, par exemple. Les faisceaux constitués par une deuxième partie du faisceau S2 et du faisceau issu de la première division du faisceau S3 sont superposés aux faisceaux ayant traversé l'enceinte 10 par un jeu de miroir partiellement réfléchissant 26 et de miroirs dichroïques 42a, 42b du même type que les miroirs 22a et 22b respectivement.

Les faisceaux S2 et S3 ayant traversé l'enceinte 10 et dont la fluence est égale à la fluence à saturation sont séparés du faisceau S1 par passage à travers le miroir dichroïque 42b (ces faisceaux sont représentés en traits tiretés sur la figure 3B). Les longueurs de parcours effectués par les différents faisceaux sont égalisées afin d'avoir une synchronisation entre les diverses impulsions au moment de leur superposition.

De même que précédemment, les faisceaux S1, S2, S3 superposés traversent l'enceinte 10 en de multiples passages. Lorsque la fluence du faisceau S3, par exemple est égale à la fluence à saturation, par exemple, on superpose la partie du faisceau S3 issue de la première division aux faisceaux S1 et S2. Le faisceau résiduel de S3 (en pointillé sur la figure 3B) est séparé des autres faisceaux ayant traversé l'enceinte 10 par passage à travers un miroir dichroïque 52a du même type que le miroir dichroïque 22a.

Sur la figure 3B, on suppose que la section efficace d'absorption du faisceau S3 est égale au double de la section efficace d'absorption du faisceau S2, cette dernière étant égale au double de la section efficace d'absorption du faisceau S1. On suppose aussi que les intensités des faisceaux sont identiques. Cet exemple n'est nullement limitatif, il suffit d'adapter les coefficients de réflexion des miroirs partiellement réfléchissants et leur nombre pour adapter le dispositif à un autre jeu de valeurs de sections efficaces d'absorption et d'intensités lasers.

De même, un autre jeu de longueurs d'ondes entraîne l'utilisation de miroirs dichroïques possédant d'autres caractéristiques spectrales que celles décrites par les courbes Ra et Rb.

La figure 4A représente des courbes de réflectivité de deux miroirs dichroïques en fonction de la longueur d'onde.

Les miroirs dichroïques correspondant à ces courbes sont utilisés pour superposer des faisceaux S4, S5, S6, S7 de longueurs d'ondes respectives λ4, λ5, λ6, λ7.

Un premier miroir dont la courbe caractéristique est notée Rd permet la réflexion du faisceau à la longueur d'onde λ7 seul.

Un second miroir dont la courbe caractéristique est notée Rc permet la réflexion des faisceaux aux longueurs d'ondes λ6 et λ7.

La figure 4B représente un dispositif conforme à l'invention répartissant quatre faisceaux S4, S5, S6, S7 de longueurs d'ondes respectives λ4, λ5, λ6, λ7 et utilisant des miroirs dichroïques tels que décrits par les courbes Rc et Rd.

Les faisceaux lasers S4, S5, S6, S7 sont délivrés par des sources lasers 12. Les faisceaux lasers sont superposés par un jeu de miroirs dichroïques 23c, 23d de courbes caractéristiques respectives Rc et Rd.

Les faisceaux superposés traversent l'enceinte 10, ils sont renvoyés par des moyens 24 de renvoi, des miroirs par exemple, qui permettent d'ajuster la longueur du trajet des faisceaux lors des passages à l'intérieur de l'enceinte.

Lorsque la fluence d'un au moins des faisceaux, S4, par exemple, est égale à la fluence à saturation, par exemple, une nouvelle partie de faisceau S4 est superposée aux faisceaux ayant traversé l'enceinte. Cette nouvelle partie du faisceau S4 est issue d'une division du faisceau S4 au sortir du laser 12 par les miroirs partiellement réfléchissants 28 et 29.

La superposition de la nouvelle partie du faisceau S4 aux faisceaux ayant traversé l'enceinte 10, se fait grâce à un miroir dichroïque 33c de même type que le miroir dichroïque 23c. Le passage par ce miroir dichroïque 33c permet de séparer le faisceau S4 résiduel ayant déjà traversé l'enceinte 10 des autres faisceaux, et d'éviter ainsi la formation d'interférences entre ce faisceau S4 résiduel et la nouvelle partie du faisceau S4 (le faisceau résiduel séparé est représenté en pointillé figure 4B).

Dans la suite du parcours, de manière similaire au cas décrit figure 3, lorsqu'un des faisceaux a sa fluence qui est égale à la fluence à saturation, par exemple, il est remplacé par une nouvelle partie de ce faisceau issu d'une division au sortir des lasers par un miroir partiellement réfléchissant 27, 28. Les faisceaux sont superposés par des miroirs dichroïques 43c, 43d, 53c, l'indice c indiquant un miroir du type de 23c et l'indice d indiquant un miroir du type de 23d. Le miroir partiellement réfléchissant 30 participe à la superposition des faisceaux par les miroirs dichroïques 43c et 43d en divisant le faisceau issu du miroir 28.

## Revendications

1. Dispositif de répartition des faisceaux lasers utilisés dans un procédé de séparation isotopique par lasers comprenant :
- une enceinte (10) contenant un corps dont on veut extraire une espèce, ce corps s'écoulant dans l'enceinte (10),
- des sources lasers (12) délivrant des impulsions lasers suivant des faisceaux S1, ..., Sn, n étant un entier au moins égal à 2, à des longueurs d'ondes différentes, permettant une excitation sélective de l'espèce à extraire et une transformation de ladite espèce après excitation, chaque longueur d'onde correspondant à une valeur de section efficace d'absorption de l'espèce à extraire,
- des miroirs partiellement réfléchissants (20, 21, 25, 26, 27, 28, 29, 30) permettant de diviser les faisceaux S1, ..., Sn en plusieurs parties,
- des moyens (22a, 22b, 32a, 42a, 42b, 52a, 23c, 23d, 33c, 43c, 43d, 53c) pour superposer les faisceaux S1, ..., Sn et les introduire en différents endroits de l'enceinte (10),
- des moyens (24) de renvoi des faisceaux permettant plusieurs passages à travers l'enceinte et un réglage des longueurs de trajet à travers l'enceinte (10),
caractérisé en ce que les moyens (22a, 22b, 32a, 42a, 42b, 52a, 23c, 23d, 33c, 43c, 43d, 53c) pour superposer les faisceaux comprennent des miroirs dichroïques de différentes catégories, chaque catégorie présentant des caractéristiques spectrales différentes de celles des autres catégories, une pluralité de moyens pour superposer les faisceaux étant disposés en des endroits prédéterminés de façon à former, à partir des faisceaux divisés, différents faisceaux contenant chacun plusieurs longueurs d'ondes, et à introduire ces faisceaux en différents endroits de l'enceinte, et en ce que le dispositif comporte aussi des moyens de soustraction de faisceaux, constitués de miroirs dichroïques, qui sont choisis et disposés de manière à soustraire, en des endroits prédéterminés, des composantes de longueurs d'ondes prédéterminées présentes dans certains des faisceaux superposés, de façon que, dans l'enceinte, toute formation d'interférences entre faisceaux contenant une même longueur d'onde soit évitée, les miroirs partiellement réfléchissants et les miroirs dichroïques étant choisis et disposés de manière à optimiser l'absorption, dans l'enceinte, d'au moins deux faisceaux de longueurs d'ondes différentes, quelles que soient les valeurs des sections efficaces d'absorption correspondant aux longueurs d'ondes de ces faisceaux.

## Patentansprüche

1. Vorrichtung zur Verteilung von Laserbündeln, die in einem Isotopentrennungsverfahren mit Lasern verwendet werden, umfassend
- einen Behälter (10), enthaltend einen Körper, aus dem man eine Spezies extrahieren will , wobei dieser Körper in dem Behälter (10) strömt,
- Laserquellen (12), die Laserimpulse in Richtung der Bündel S1, ..., Sn liefern, wobei n eine ganze Zahl mindestens gleich 2 ist, mit unterschiedlichen Wellenlängen, die eine selektive Anregung der zu extrahierenden Spezies und nach Anregung eine Umwandlung dieser Spezies gestatten, wobei jede Wellenlänge einem Wert des Absorptionsquerschnitts der zu extrahierenden Spezies entspricht,
- teilweise reflektierende Spiegel (20, 21, 25, 26, 27, 28, 29, 30), die es gestatten, die Bündel S1, ..., Sn in mehrere Teile zu teilen,
- Einrichtungen (22a, 22b, 32a, 42a, 42b, 52a, 23c, 23d, 33c, 43c, 43d, 53c), um die Bündel S1, ..., Sn zu überlagern und sie an verschiedene Orte des Behälters (10) zu führen, und
- Einrichtungen (24) zur Zurückstrahlung der Bündel, mehrere Passagen durch den Behälter und eine Einstellung der Weglängen durch den Behälter (10) gestattend,
dadurch gekennzeichnet, daß die Einrichtungen (22a, 22b, 32a, 42a, 42b, 52a, 23c, 23d, 33c, 43c, 43d, 53c) zur Überlagerung der Bündel dichroitische Spiegel verschiedener Klassen umfassen, wobei jede Klasse von den anderen Klassen verschiedene spektrale Eigenschaften besitzt, an vorher bestimmten Stellen eine Mehrzahl von Einrichtungen zur Überlagerung der Bündel angeordnet ist, um aus den geteilten Bündeln verschiedene Bündel zu bilden, die jeweils mehrere Wellenlängen enthalten, und um diese Bündel an verschiedene Stellen des Behälters zu führen, und dadurch, daß die Vorrichtung überdies Einrichtungen zur Entfernung dieser Bündel enthält, die aus dichroitischen Spiegeln bestehen, die so gewählt und angeordnet sind, um an vorher bestimmten Stellen Komponenten vorher bestimmter Wellenlänge, die in gewissen der überlagerten Bündel vorhanden sind, zu entfernen, so daß im Behälter jede Interferenzbildung zwischen Bündeln, die eine gleiche Wellenlänge enthalten, vermieden wird, wobei die teilweise reflektierenden Spiegel und die dichroitischen Spiegel so gewählt und angeordnet sind, um im Behälter die Absorption wenigstens zweier Bündel verschiedener Wellenlängen zu optimieren, ganz gleich, was die Werte der den Wellenlängen dieser Bündel entsprechenden Absorptionsquerschnitte sein mögen.

## Claims

1. Device for distributing laser beams used in an isotopic separation method by lasers comprising an enclosure (10) containing a body from which a substance is to be extracted, said body flowing in the enclosure (10), laser sources (12) supplying laser pulses of beams S1, .., Sn, n being an integer at least equal to 2, at different wavelengths, permitting a selective excitation of the substance to be extracted and a transformation of said substance following excitation, each wavelength corresponding to an effective absorption cross-section of the substance to be extracted, partly reflecting mirrors (20, 21, 25, 26, 27, 28, 29, 30) making it possible to subdivided the beams S1, ..., Sn into several parts, means (22a, 22b, 32a, 42a, 42b, 52a, 23c, 23d, 33c, 43c, 43d, 53c) for superimposing the beams S1, ..., Sn and introduce them at different points of the enclosure (10), beam reflecting means (24) making it possible to have several passages through the enclosure and regulate the lengths of passage through the enclosure (10), characterized in that the means (22a, 22b, 32a, 42a, 42b, 52a, 23c, 23d, 33c, 43c, 43d, 53c) for superimposing the beams incorporate dichroic mirrors of different categories, each category having different spectral characteristics from those of the other categories, a plurality of means for superimposing the beams being located at predetermined locations so as to form, from the subdivided beams, various beams each containing several wavelengths and introducing said beams at different points of the enclosure, and in that the device also has beam subtracting means constituted by dichroic mirrors, which are chosen and arranged so as to subtract, at predetermined locations components of predetermined wavelengths present in certain of the superimposed beams, so that in the enclosure, any interference formation between beams containing the same wavelength is prevented, the partly reflecting mirrors and the dichroic mirrors being chosen and arranged in such a way as to optimize the absorption in the enclosure of at least two beams of different wavelengths, no matter what the effective absorption cross-sections corresponding to the wavelengths of these beams.
